# EUROPÄISCHE PATENTSCHRIFT

(11) **EP 0 592 817 B1**
(45) Veröffentlichungstag und Bekanntmachung des Hinweises auf die Patenterteilung: **11.12.1996**
(21) Anmeldenummer: 93114657.5
(22) Anmeldetag: 13.09.1993
(51) Int. Cl.: F02C 3/02

(54) **Gasturbogruppe mit einer Druckwellenmaschine als Brennkammer**
Gas turbine plant with a pressure wave machine
Installation de turbine à gaz avec machine à ondes de pression

(30) Priorität: 10.10.1992 DE 4234248
(43) Veröffentlichungstag der Anmeldung: 20.04.1994
(73) Patentinhaber: ASEA BROWN BOVERI AG, 5401 Baden (CH)
(72) Erfinder: Althaus, Rolf, Dr., CH-9230 Flawil (CH); Wettstein, Hans, Dr., CH-5442 Fislisbach (CH); Frutschi, Hans Ulrich, CH-5223 Riniken (CH)
(74) Vertreter: Klein, Ernest

(56) Entgegenhaltungen:
- EP-A- 0 212 181
- EP-A- 0 503 277
- GB-A- 1 110 302
- GB-A- 2 189 844
- US-A- 2 705 867
- US-A- 4 111 598

## Beschreibung

Die Erfindung betrifft eine Gasturbogruppe gemäss dem Oberbegriff des Patentanspruches 1.

Eine derartige Gasturbogruppe ist z.B. aus EP-A-0 212 181 bekannt.

Es ist üblich, eine Turbine aus einer Hochdruckturbine und einer Niederdruckturbine aufzubauen oder, falls notwendig, die Turbine in eine Hochdruckturbine, eine Mitteldruckturbine und eine Niederdruckturbine zu unterteilen. Eine erste Austrittsöffnung der Druckwellenmaschine wird an die Hochdruckturbine angeschlossen und eine zweite Austrittsöffnung der Druckwellenmaschine wird zusammen mit dem Austritt der Hochdruckturbine an die Niederdruckturbine angeschlossen.

Sofern jedoch zwischen Hochdruckturbine und Niederdruckturbine eine Mitteldruckturbine notwendig ist, ergeben sich Probleme.

Die Aufgabe, welche mit der vorliegenden Erfindung gelöst werden soll, besteht in der Schaffung einer Gasturbogruppe, welche in der Lage ist, das Druckgefälle von zwei aus der Durckwellenmaschine austretenden Heissgasströmen von unterschiedlichem Druck optimal zu verarbeiten und durch Verbesserung des Entspannungsvorganges den Wirkungsgrad der Turbine zu steigern.

Diese Aufgabe wird erfindungsgemäss dadurch gelöst, dass die Gasturbogruppe die Merkmale im Kennzeichen des Patentanspruches 1 aufweist.

Die Verwendung einer Doppelspirale hat den Vorteil, dass gleichzeitig mehr Druckgefälle und mehr Volumenstrom verarbeitet werden kann. Die Radialturbine mit Doppelspirale kann zwei Turbinen, nämlich eine Hochdruckturbine und eine Mitteldruckturbine, ersetzen, wobei der Wirkungsgrad zusätzlich verbessert wird. Von besonderem Vorteil ist, dass durch die parallele Entspannung zweier Heissgasmassenströme aus der Hochdruck-Treibgasleitung und aus der Niederdruck-Treibgasleitung eine gute Durchmischung am Ausgang der Radialturbine mit Doppelspirale erreicht wird.

Die Parallelentspannung des Hochdruck- und des Mitteldruck-Teilstromes in nur einer Turbine ermöglicht es, die Leistung der Hochdruck-Mitteldruck-Turbine in gewissen Grenzen zu verändern. Dadurch können die Leistungsgleichgewichte, bzw. die einzelnen Komponenten besser optimiert werden. Je nach Prozessführung ist es möglich, die gesamte Verdichterleistung des Niederdruck-Hochdruckverdichters mit der Hochdruck-Mitteldruck-Turbine zu erzeugen. Die Niederdruck-Turbine kann in diesem Fall als unabhängige, d.h. freilaufende Arbeitsturbine betrieben werden.

Ein Ausführungsbeispiel der erfindungsgemässen Gasturbogruppe ist im folgenden anhand der beigefügten Zeichnung ausführlich beschrieben. Es zeigt
- Fig.1: den Stand der Technik in schematischer Darstellung,
- Fig.2: eine schematische Darstellung der ganzen Gasturbogruppe,
- Fig.3: eine schematische Darstellung einer Gegenstrom-Druckwellenmaschine und
- Fig.4: eine schematische Darstellung einer Gleichstrom-Druckwellenmaschine.

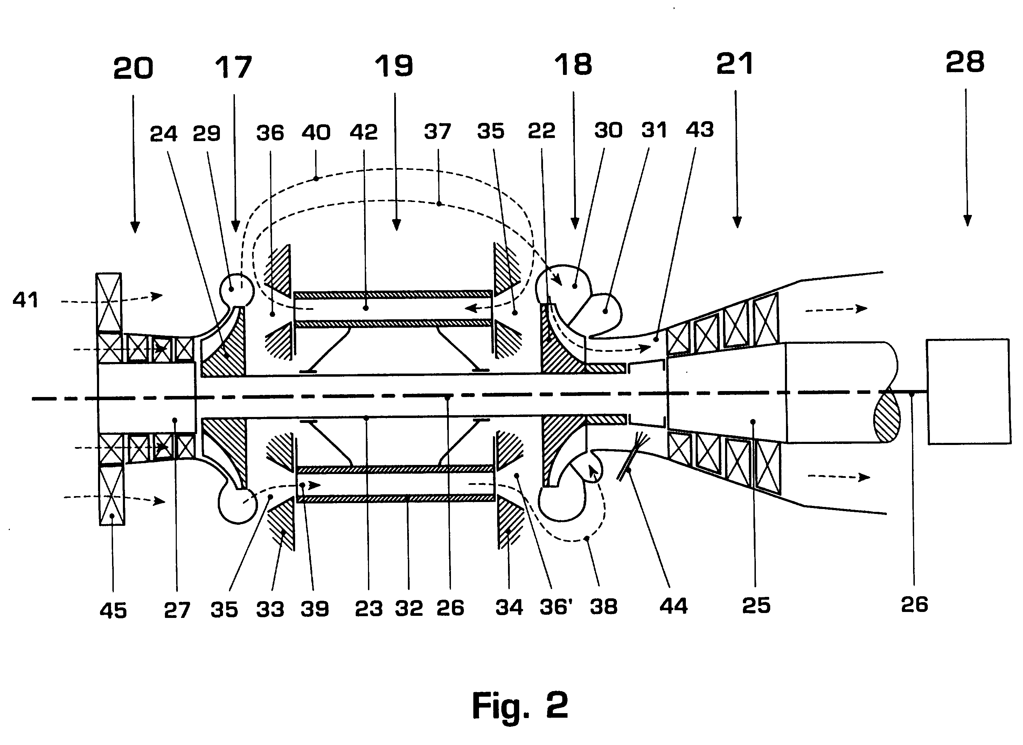

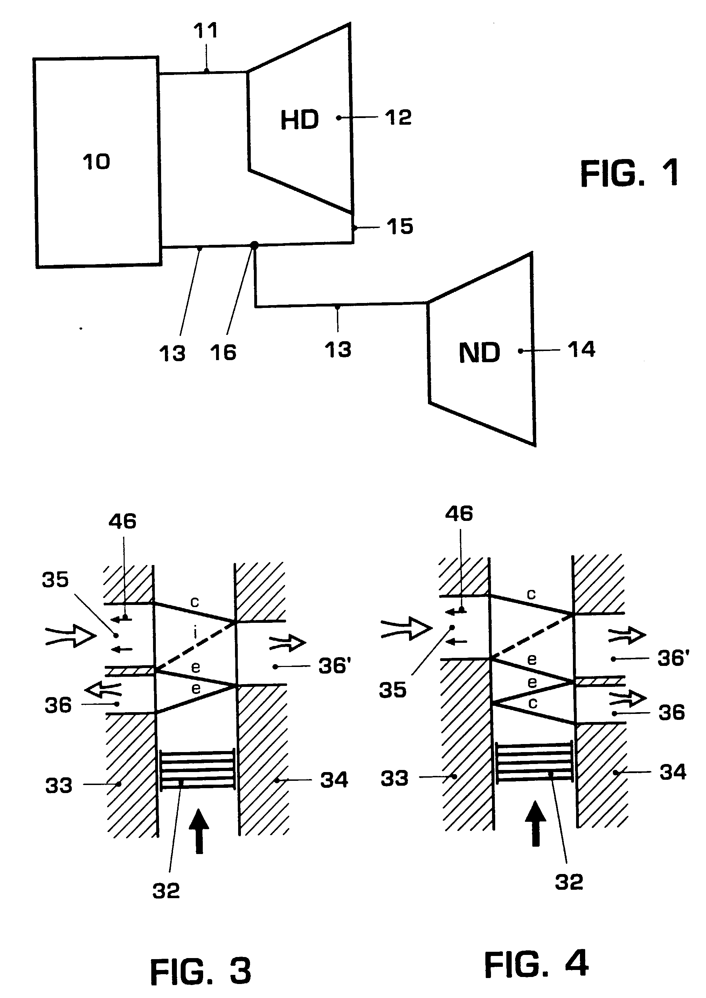

Gemäss Fig.1 ist eine Druckwellenmaschine 10 über eine Hochdruck-Treibgasleitung 11 an eine Hockdruck-Turbine 12 und über eine Niederdruck-Treibgasleitung 13 an eine Niederdruck-Turbine 14 angeschlossen. Eine Austrittsleitung 15 der Hochdruck-Turbine 12 mündet an der Verzweigung 16 in die Niederdruck-Treibgasleitung 13.

Diese an sich bekannte Gasturbogruppe soll nun, wie in Fig. 2 dargestellt ist, verbessert werden.

Gemäss Fig. 2 ist zwischen einem Hochdruck-Verdichter 17 und einer Hochdruck-Mitteldruck-Turbine 18 eine Druckwellenmaschine 19 angeordnet. Diese Druckwellenmaschine 19 besitzt isocore Brennkammern 42. An dem Hochdruck-Verdichter 17 ist ein Niederdruck-Verdichter 20 angeschlossen und an die Hochdruck-Mitteldruck-Turbine 18 ist eine Niederdruck-Turbine 21 angeschlossen. Zwischen der Hochdruck-Mitteldruck-Turbine 18 und der Niederdruck-Turbine 21 befindet sich eine Brennkammer 43 mit einem Brenner 44. Ein Turbinenrad 22 der Hochdruck-Mitteldruck-Turbine 18 treibt über eine erste Welle 23 ein Verdichterrad 24 des Hochdruck-Verdichters 17 an.

Ein Turbinenrad 25 der Niederdruck-Turbine 21 treibt über eine zweite Welle 26 ein Verdichterrad 27 des Niederdruck-Verdichters 20 an. Ausserdem wird vom Turbinenrad 25 der Niederdruck-Turbine 21 über dieselbe zweite Welle 26 ein Generator 28 angetrieben. Falls die gesamte Verdichterleistung des Hochdruck-Verdichters 17 und des Niederdruck-Verdichters 20 mit der Hochdruck-Mitteldruck-Turbine 18 erzeugt werden soll, so wird das Verdichterrad 27 an die erste Welle 23 angeschlossen. In diesem Falle wird vom Turbinenrad 25 der Niederdruck-Turbine 21 über die zweite Welle 26 ausschliesslich der Generator 28 angetrieben.

Falls der Generator 28 auch vom Turbinenrad 22 der Hochdruck-Mitteldruck-Turbine 18 angetrieben werden soll, so wird das Turbinenrad 25 und auch der Generator 28 an die erste Welle 23 angeschlossen und die zweite Welle 26 kann gänzlich weggelassen werden.

Sowohl der Hochdruck-Verdichter 17, als auch die Hochdruck-Mitteldruck-Turbine 18 sind als Radial-Verdichter, bzw. als Radial-Turbine ausgebildet. Hingegen sind der Niederdruck-Verdichter 20 und die Niederdruck-Turbine 21 als Achsial-Verdichter, bzw. als Achsial-Turbine, ausgebildet. Im Gegensatz zum Hochdruck-Verdichter 17, der nur eine Einfach-Spirale 29 besitzt, weist die Hochdruck-Mitteldruck-Turbine 18 eine Doppelspirale 30, 31 auf.

Gemäss Fig. 2 weist die Druckwellenmaschine 19 ein Zellenrad 32 auf, das drehbar auf der ersten Welle 23 gelagert ist und die isocoren Brennkammern 42 enthält. Dieses Zellenrad 32 befindet sich in einem Gehäuse der Druckwellenmaschine 19. Von diesem Gehäuse sind in Fig. 2 nur zwei Seitenwände 33 und 34 angedeutet. Diese Seitenwände 33 und 34 weisen Eintrittskanäle 35 und Austrittskanäle 36 auf.

Die Eintrittskanäle 35 sind - wie durch Pfeile 39, 40 angedeutet - durch nicht dargestellte Leitungen mit dem Hochdruck-Verdichter 17 verbunden und die Austrittskanäle 36 sind - wie durch Pfeile 37 und 38 angedeutet - durch eine nicht dargestellte Hochdruck-Treibgasleitung 37 und eine nicht dargestelle Mitteldruck-Treibgasleitung 38 mit der Doppelspirale 30 und 31 der Hochdruck-Mitteldruck-Turbine 18 verbunden.

Die Wirkungsweise der beschriebenen Gasturbogruppen ist wie folgt:

Sobald die Gasturbogruppe einmal in Betrieb ist, wird durch den Niederdruck-Verdichter 20 Luft in Richtung des Pfeils 41 angesaugt, verdichtet und dem Hochdruck-Verdichter 17 zugeführt. Diese verdichtete Luft wird im Hochdruck-Verdichter 17 weiter verdichtet und der Druckwellenmaschine 19 zugeführt. Im Hochdruckverdichter 17 strömt durch das Verdichterrad 24 die Luft in die Einfachspirale 29 und aus dieser strömt die verdichtete Luft - wie durch Pfeile 39 und 40 angedeutet - in die Eintrittskanäle 35 der Druckwellenmaschine 19. In der Druckwellenmaschine 19 wird die komprimierte Luft mit Brennstoff vermischt und angezündet. Die aus der Druckwellenmaschine 19 austretenden Heissgasströme gelangen durch die Austrittskanäle 36 - wie durch Pfeile 37 und 38 angedeutet - in die beiden Teile 30 und 31 der Doppelspirale 30, 31 der Hochdruck-Mitteldruck-Turbine 18. Im Turbinenrad 22 der Hochdruck-Mitteldruck-Turbine 18 werden die beiden Heissgasströme aus der Doppelspirale 30, 31 miteinander vermischt und gelangen über die Brennkammer 43 in die Niederdruck-Turbine 21. In dieser Brennkammer wird mit Hilfe des Brenners 44 der Heissgasstrom, der aus der Hochdruck-Mitteldruck-Turbine 18 kommt, weiter erwärmt, bevor er in die Niederdruck-Turbine 21 gelangt. Durch diesen durch die Hochdruck-Mitteldruck-Turbine strömenden Heissgasstrom werden der Hochdruck-Verdichter und der Niederdruck-Verdichter angetrieben und durch den anschliessend durch die Niederdruck-Turbine strömenden Heissgasstrom wird der Generator 28 angetrieben.

Durch die Anwendung einer Doppelspirale 30, 31 in der Hochdruck-Mitteldruck-Turbine 18 kann gleichzeitig mehr Druckgefälle und mehr Volumenstrom verarbeitet werden.

Diese Turbine tritt anstelle von zwei kleinen Radialturbinen, nämlich einer Hochdruck- und einer Mitteldruck-Turbine. Durch die parallele Entspannung der beiden Heissgasströme wird eine gute Durchmischung am Turbinenausgang erreicht.

Durch die Parallelentspannung eines Hochdruck- und eines Mitteldruck-Teilstromes in einer einzigen Turbine ergibt sich die Möglichkeit, die Leistung der Hochdruck-Mitteldruck-Turbine in gewissen Grenzen zu ändern. Dadurch können die Leistungsgleichgewichte, bzw. die einzelnen Komponenten besser optimiert werden. Je nach Prozessführung ist es möglich, die gesamte Verdichterleistung des Niederdruck-Hochdruck-Verdichters mit der Hochdruck-Mitteldruck-Turbine zu erzeugen. Die Niederdruck-Turbine kann in diesem Fall als unabhängige, d.h. als freilaufende Arbeitsturbine betrieben werden.

Gemäss Fig. 3 kann die Druckwellenmaschine 19 als Gegenstrommaschine ausgebildet sein. Das Zellenrad 32 befindet sich zwischen den beiden Seitenwänden 33 und 34. Die luftseitige Seitenwand 33 weist eine Eintrittsöffnung 35 auf, welche an den Verdichter 17 angeschlossen ist und Brennstoffdüsen 46 enthält, sowie eine Austrittsöffnung 36, welche an den ersten Teil 30 der Doppelspirale 30, 31 angeschlossen ist. Die gasseitige Seitenwand 34 weist nur eine Austrittsöffnung 36' auf, welche an den zweiten Teil 31 der Doppelspirale 30, 31 angeschlossen ist.

Gemäss Fig. 4 kann die Druckwellenmaschine 19 als Gleichstrommaschine ausgebildet sein. Das Zellenrad 32 befindet sich zwischen den beiden Seitenwänden 33 und 34. Die luftseitige Seitenwand 33 weist nur eine Eintrittsöffnung 35 auf, welche an den Verdichter 17 angeschlossen ist und Brennstoffdüsen 46 enthält. Die gasseitige Seitenwand 34 weist zwei Austrittsöffnungen 36 und 36' auf, von denen die eine Austrittsöffnung 36 an den ersten Teil 30 der Doppelspirale 30, 31 angeschlossen ist, und von denen die andere Austrittsöffnung 36' an den zweiten Teil 31 der Doppelspirale 30, 31 angeschlossen ist.

Die beschriebene Gasturbogruppe kann wie in Fig. 2 dargestellt, zum Antrieb eines Generators 28 verwendet werden.

Mit Hilfe eines sogenannten Frontfans 45 kann die beschriebene Gasturbogruppe als Jet-Turbine für ein Flugzeug verwendet werden.

### Bezugsziffernliste

- 10: Druckwellenmaschine (bekannt)
- 11: Hochdruck-Treibgasleitung
- 12: Hochdruck-Turbine
- 13: Niederdruck-Treibgasleitung
- 14: Niederdruck-Turbine
- 15: Austrittsleitung
- 16: Verzweigung
- 17: Hochdruck-Verdichter
- 18: Hochdruck-Mitteldruck-Turbine
- 19: Druckwellenmaschine (neu)
- 20: Niederdruck-Verdichter
- 21: Niederdruck-Turbine
- 22: Turbinenrad der Hochdruck-Mitteldruck-Turbine 18
- 23: erste Welle
- 24: Verdichterrad des Hochdruck-Verdichters
- 25: Turbinenrad der Niederdruck-Turbine 21
- 26: zweite Welle
- 27: Verdichterrad des Niederdruck-Verdichters
- 28: Generator
- 29: Einfach-Spirale
- 30: Doppel-Spirale
- 31: Doppel-Spirale
- 32: Zellenrad
- 33: Seitenwand
- 34: Seitenwand
- 35: Eintritts-Kanäle
- 36: Austritts-Kanäle
- 37: Hochdruck-Treibgasleitung zur Turbine
- 38: Mitteldruck-Treibgasleitung zur Turbine
- 39: Leitung vom Verdichter
- 40: Leitung vom Verdichter
- 41: Pfeil
- 42: Brennkammer
- 43: Brennkammer
- 44: Brenner
- 45: Frontfan
- 46: Brennstoffdüsen

## Patentansprüche

1. Gasturbogruppe enthaltend eine Turbine (18) mit mindestens einer Hochdruckstufe (30) und einer Mitteldruckstufe (31), mindestens einer Brennkammer, wobei diese Brennkammer die Form einer Druckwellenmaschine (19) aufweist, mit einem Zellenrad (32), welches sich zwischen je einem mit Eintrittsund Austritts-Oeffnungen (35, 36, 36') versehenen luftseitigen und gasseitigen Seitenteil (33, 34) dreht,
dadurch gekennzeichnet,
- dass die Hochdruckstufe (30) und die Mitteldruckstufe (31) in einer Hochdruck-Mitteldruck-Turbine (18) zusammengefasst sind, welche als Radialturbine ausgebildet sind,
- dass die Hochdruck-Mitteldruck-Turbine (18) eine Doppelspirale (30, 31) aufweist, von welcher die eine Spirale (30) an eine erste Austrittsöffnung (36) der Druckwellenmaschine (19) und die andere Spirale (31) an eine zweite Austrittsöffnung (36') der Druckwellenmaschine (19) angeschlossen ist,
- und dass die Radialturbine mit einem einzigen Radialturbinenrad (22) ausgebildet ist, in welchem sich Heissgasströme der beiden Teile der Doppelspirale (30, 31) mischen.

2. Gasturbogruppe nach Anspruch 1, dadurch gekennzeichnet, dass die Druckwellenmaschine (19) als Gegendruckmaschine ausgebildet ist, mit einer luftseitigen Seitenwand (33), welche eine Eintrittsöffnung (35) aufweist, die an einen Verdichter (17) angeschlossen ist, sowie eine Austrittsöffnung (36), die an den ersten Teil (30) der Doppelspirale (30, 31) angeschlossen ist, und mit einer gasseitigen Seitenwand (34), die eine Austrittsöffnung (36') aufweist, welche an den zweiten Teil (31) der Doppelspirale (30, 31) der Hochdruck-Mitteldruck-Turbine (18) angeschlossen ist.

3. Gasturbogruppe nach Anspruch 1, dadurch gekennzeichnet, dass die Druckwellenmaschine (19) als Gleichstrommaschine ausgebildet ist, mit einer luftseitigen Seitenwand (33), welche eine Eintrittsöffnung (35) aufweist, die an einen Verdichter (17) angeschlossen ist, und mit einer gasseitigen Seitenwand (34), welche zwei Austrittsöffnungen (36, 36') aufweist, von denen die eine Austrittsöffnung (36) an den einen Teil (30) der Doppelspirale (30, 31) angeschlossen ist, und von denen die andere Austrittsöffnung (36') an den anderen Teil (31) der Doppelspirale (30, 31) der Hochdruck-Mitteldruck-Turbine (18) angeschlossen ist.

4. Gasturbogruppe nach Anspruch 1, ferner enthaltend einen Verdichter, der aus einem Hochdruck-Verdichter (17) und einem Niederdruck-Verdichter (20) zusammengesetzt ist, einen von der Turbine (18, 21) angetriebenen Generator (28), eine Welle (23, 26), welche ein Turbinenrad (22, 25) der Turbine (18, 21) mit einem Verdichterrad (24, 27) des Verdichters (17, 20) und mit dem Generator (28) verbindet, dadurch gekennzeichnet,
- dass die Welle (23, 26) zwei konzentrische Wellen (23, 26) aufweist,
- dass das Turbinenrad (22, 25) zwei separate Turbinenräder aufweist,
- dass das Verdichterrad (24, 27) zwei separate Verdichterräder aufweist,
- dass das Turbinenrad (22) der Hochdruck-Mitteldruck-Turbine (18) über die erste Welle (23) mit den Verdichterrädern (24, 27) des Hochdruck- und Niederdruck-Verdichters (17, 20) verbunden ist,
- und dass das Turbinenrad (25) der Niederdruck-Turbine (21) über die Welle (26) mit dem Generator (28) verbunden ist.

5. Gasturbogruppe nach Anspruch 4, dadurch gekennzeichnet, dass die Welle (23) das Turbinenrad (22) mit dem Verdichterrad (24) und die Welle (26) das Turbinenrad (25) mit dem Verdichterrad (27) sowie mit dem Generator (28) verbinden.

6. Gasturbogruppe nach Anspruch 1, dadurch gekennzeichnet, dass die Gasturbogruppe als stationäre Einheit zum Antrieb eines Generators (28) dient.

7. Gasturbogruppe nach Anspruch 1, dadurch gekennzeichnet, dass die Gasturbogruppe als Jet-Turbine für ein Flugzeug dient und vorne ein Frontfan (45) aufweist.

8. Gasturbogruppe nach Anspruch 1, dadurch gekennzeichnet, dass stromab der Hochdruck-Mitteldruck-Turbine (18) eine weitere Brennkammer (43) angeordnet ist.

## Claims

1. Gas turbine group comprising a turbine (18) with at least one high-pressure stage (30) and one medium-pressure stage (31), at least one combustion chamber, this combustion chamber taking the form of a pressure wave machine (19), with a cell wheel (32) which rotates between an air-side and a gas-side side part (33, 34) provided with inlet and outlet openings (35, 36, 36'),
characterized in that
- the high-pressure stage (30) and the medium-pressure stage (31) are combined in a high-pressure/medium-pressure turbine (18) which is designed as a radial turbine,
- the high-pressure/medium-pressure turbine (18) has a double spiral (30, 31), of which one spiral (30) is connected to a first outlet opening (36) of the pressure wave machine (19) and the other spiral (31) is connected to a second outlet opening (36') of the pressure wave machine (19),
- and the radial turbine is designed with a single radial turbine rotor (22), in which hot-gas streams from the two parts of the double spiral (30, 31) mix.

2. Gas turbine group according to Claim 1, characterized in that the pressure wave machine (19) is designed as a back-pressure machine, with an air-side side wall (33), which has an inlet opening (35), which is connected to a compressor (17), and an outlet opening (36), which is connected to the first part (30) of the double spiral (30, 31), and with a gas-side side wall (34), which has an outlet opening (36'), which is connected to the second part (31) of the double spiral (30, 31) of the high-pressure/medium-pressure turbine (18).

3. Gas turbine group according to Claim 1, characterized in that the pressure wave machine (19) is designed as a uniflow machine, with an air-side side wall (33), which has an inlet opening (35), which is connected to a compressor (17), and with a gas-side side wall (34), which has two outlet openings (36, 36'), of which one outlet opening (36) is connected to one part (30) of the double spiral (30, 31), and of which the other outlet opening (36') is connected to the other part (31) of the double spiral (30, 31) of the high-pressure/ medium-pressure turbine (18).

4. Gas turbine group according to Claim 1, further comprising a compressor, which is made up of a high-pressure compressor (17) and a low-pressure compressor (20), a generator (28) driven by the turbine (18, 21), a shaft (23, 26) which connects a turbine rotor (22, 25) of the turbine (18, 21) to a compressor impeller (24, 27) of the compressor (17, 20) and to the generator (28),
characterized
- in that the shaft (23, 26) has two concentric shafts (23, 26),
- in that the turbine rotor (22, 25) has two separate turbine rotors,
- in that the compressor impeller (24, 27) has two separate compressor impellers,
- in that the turbine rotor (22) of the high-pressure/medium-pressure turbine (18) is connected via the first shaft (23) to the compressor impellers (24, 27) of the high-pressure and low-pressure compressor (17, 20),
- and in that the turbine rotor (25) of the low-pressure turbine (21) is connected via the shaft (26) to the generator (28).

5. Gas turbine group according to Claim 4, characterized in that the shaft (23) connects the turbine rotor (22) to the compressor impeller (24) and the shaft (26) connects the turbine rotor (25) to the compressor impeller (27) and to the generator (28).

6. Gas turbine group according to Claim 1, characterized in that the gas turbine group serves as a stationary unit for driving a generator (28).

7. Gas turbine group according to Claim 1, characterized in that the gas turbine group serves as a jet turbine for an aircraft and has a front fan (45) at the front.

8. Gas turbine group according to Claim 1, characterized in that a further combustion chamber (43) is arranged downstream of the high-pressure/medium-pressure turbine (18).

## Revendications

1. Turbogroupe à gaz comprenant une turbine (18) avec au moins un étage à haute pression (30) et un étage à moyenne pression (31), au moins une chambre de combustion, dans laquelle cette chambre de combustion présente la forme d'une machine à ondes de pression (19), avec une roue cellulaire (32) qui tourne entre des parties latérales (33, 34) côté air et côté gaz pourvues chacune d'ouvertures d'entrée et de sortie (35, 36, 36'), caractérisé en ce que
- l'étage à haute pression (30) et l'étage à moyenne pression (31) sont rassemblés dans une turbine à haute et moyenne pression (18), qui constitue une turbine radiale; en ce que
- la turbine à haute et moyenne pression (18) présente une double spirale (30, 31), dont l'une des spirales (30) est raccordée à une première ouverture de sortie (36) de la machine à ondes de pression (19) et dont l'autre spirale (31) est raccordée à une deuxième ouverture de sortie (36') de la machine à ondes de pression (19); et en ce que
- la turbine radiale est constituée avec une seule roue de turbine radiale (22), dans laquelle les courants de gaz chauds des deux parties de la double spirale (30, 31) se mélangent.

2. Turbogroupe à gaz selon la revendication 1, caractérisé en ce que la machine à ondes de pression (19) est constituée par une machine à contre-pression, avec une paroi latérale (33) du côté air, qui présente une ouverture d'entrée (35) qui est raccordée à un compresseur (17), ainsi qu'une ouverture de sortie (36), qui est raccordée à la première partie (30) de la double spirale (30, 31), et avec une paroi latérale (34) coté gaz, qui présente une ouverture de sortie (36') qui est raccordée à la seconde partie (31) de la double spirale (30, 31) de la turbine à haute et moyenne pression (18).

3. Turbogroupe à gaz selon la revendication 1, caractérisé en ce que la machine à ondes de pression (19) est constituée par une machine à courant continu, avec une paroi latérale (33) du côté air, qui présente une ouverture d'entrée (35) qui est raccordée à un compresseur (17), et avec une paroi latérale (34) du côté gaz, qui présente deux ouvertures de sortie (36, 36') dont l'une des ouvertures de sortie (36) est raccordée à la première partie (30) de la double spirale (30, 31) et dont l'autre ouverture de sortie (36') est raccordée à l'autre partie (31) de la double spirale (30, 31) de la turbine à haute et moyenne pression (18).

4. Turbogroupe à gaz selon la revendication 1, comprenant en outre un compresseur qui est composé d'un compresseur à haute pression (17) et d'un compresseur à basse pression (20), un générateur (28) entraîné par la turbine (18, 21), un arbre (23, 26) qui relie une roue de turbine (22, 25) de la turbine (18, 21) à une roue de compresseur (24, 27) du compresseur (17, 20) et au générateur (28), caractérisé en ce que
- l'arbre (23, 26) présente deux arbres concentriques (23, 26); en ce que
- la roue de turbine (22, 25) présente deux roues de turbine séparées; en ce que
- la roue de compresseur (24, 27) présente deux roues de compresseur séparées; en ce que
- la roue de turbine (22) de la turbine à haute et moyenne pression (18) est reliée par le premier arbre (23) aux roues de compresseur (24, 27) du compresseur à haute et basse pression (17, 20); et en ce que
- la roue de turbine (25) de la turbine à basse pression (21) est reliée par l'arbre (26) au générateur (28).

5. Turbogroupe à gaz selon la revendication 4, caractérisé en ce que l'arbre (23) relie la roue de turbine (22) à la roue de compresseur (24) et l'arbre (26) relie la roue de turbine (25) à la roue de compresseur (27) ainsi qu'au générateur (28).

6. Turbogroupe à gaz selon la revendication 1, caractérisé en ce que le turbogroupe à gaz sert d'unité stationnaire pour l'entraînement d'un générateur (28).

7. Turbogroupe à gaz selon la revendication 1, caractérisé en ce que le turbogroupe à gaz sert de turbine à réaction pour un avion et présente à l'avant un soufflant avant (45).

8. Turbogroupe à gaz selon la revendication 1, caractérisé en ce qu'une autre chambre de combustion (43) est disposée en aval de la turbine à haute et moyenne pression (18).
